# EUROPÄISCHE PATENTSCHRIFT

(11) **EP 2 993 017 B1**
(45) Veröffentlichungstag und Bekanntmachung des Hinweises auf die Patenterteilung: **22.11.2017**
(21) Anmeldenummer: 15172633.8
(22) Anmeldetag: 18.06.2015
(51) Int. Cl.: B29B 17/02

(54) **VERFAHREN ZUM TRENNEN DOUBLIERTER PLATTEN**
METHOD FOR SEPARATING DOUBLED PLATES
PROCÉDÉ DE SÉPARATION DE PLAQUES DOUBLÉES

(30) Priorität: 05.09.2014 DE 102014217765
(43) Veröffentlichungstag der Anmeldung: 09.03.2016
(73) Patentinhaber: ContiTech Transportbandsysteme GmbH, 30165 Hannover (DE)
(72) Erfinder: Lotz, Florian, Dr., 37647 Brevörde (DE); Kolbe, Axel, Dr., 07924 Neundorf (DE)
(74) Vertreter: Preusser, Andrea

(56) Entgegenhaltungen:
- WO-A2-94/07670
- WO-A2-2005/120784
- US-A1- 2004 112 994
- US-A1- 2006 163 394
- "Neuanfang nach kalter Trennung - auch für Kunststoffe möglich", , 13. Juli 2014 (2014-07-13), XP055244709, Gefunden im Internet: URL:http://www.ulrich-jochimsen.de/files/K alte_Trennung_Deppe.pdf [gefunden am 2016-01-26]

## Beschreibung

Die Erfindung betrifft ein Verfahren zum Trennen von doublierten Platten auf der Basis wenigstens eines Kautschuks, insbesondere bei der Herstellung von Fördergurten.

In der kautschukverarbeitenden Industrie werden während der Konfektion üblicherweise vordoublierte Platten aus verschiedenen Kautschukmischungen verwendet. Das Doublieren von Kautschukmaterial ist bspw. aus DE1161003A1 und insbesondere für Fördergurte aus DE3810812A1 bekannt.

Während der Konfektion entstehen durch Beschnitt doublierte Materialien, weiterhin fallen doublierte Kautschukplatten an, die nicht mehr benötigt werden. Durch Verschnitt und Überproduktion entstehen so ständig doublierte Reste, die nicht mehr für die einstige Anwendung genutzt werden können, da jede Weiterverarbeitung zu einer Vermischung der beiden Materialien und somit zu einer Qualitätsminderung führt. Diese Reste können lediglich in Niedrig-Qualitätsprodukten verwendet werden, d.h. ihr Wert wird deutlich verringert. Weiterhin können derartige Reste auch schlicht nicht mehr wiederverwendbar sein, da eine Anwendung fehlt oder die doublierten Mischungen sich gegenseitig negativ beeinflussen. In diesem Fall folgt kostenseitig ein Totalverlust. Aus dem Dokument WO94/07670A2 ist es bekannt, plattenförmige Reifenteile auf Kautschukbasis mittels flüssigem Stickstoff zu kühlen und anschließend zerquetscht und hierbei aufgetrennt. Die Aufgabe der Erfindung besteht nun darin, ein Verfahren bereitzustellen, welches eine Trennung der doublierten Platten einfach und kostengünstig ermöglicht. Hierdurch werten die Rohstoffe nicht abgewertet und eine gleichmäßige Produktqualität ermöglicht. Es ergibt sich ein anteiliger Ersatz von neuer Mischung durch die rückgewonnene Mischung, so dass die Herstellkosten gesenkt werden können und die Marge verbessert werden kann. Gelöst wird diese Aufgabe dadurch, dass die doublierten Platten in einem ersten Verfahrensschritt rapide abgekühlt und in wenigstens einem weiteren Verfahrensschritt voneinander gelöst, d.h. getrennt, werden.

Rapides Abkühlen bedeutet in diesem Zusammenhang, dass das Abkühlen in einem sehr kurzen Zeitraum erfolgt. Meist wird hierbei innerhalb nur weniger nur Minuten die Ist-Temperatur auf die gewünschte Soll-Temperatur abgesenkt. Die Zeitspanne liegt hierbei zwischen 1 bis 30 Minuten, bevorzugt zwischen 5 und 10 Minuten.

Überraschenderweise hat sich gezeigt, dass durch ein derartiges rapides Abkühlen ein Nachlassen der Trennkräfte der doublierten Platten eintritt und somit ein vergleichsweise einfaches Lösen der Platten voneinander ermöglicht wird.

Das Abkühlen kann mit allen handelsüblichen Kühlverfahren erfolgen. So zum Beispiel durch ein Kühlgerät, eine Kühlwalze oder auch durch einen separaten Kühlraum.

Die Soll-Temperatur liegt erfindungsgemäß zwischen -20 °C und +5°C, bevorzugt zwischen -10°C bis +1°C.

Bei diesen Temperaturen lassen sich die doublierten Platten am einfachsten voneinander trennen. Das Trennen erfolgt durch ruckartiges Ziehen.

Um eine möglichst große Oberfläche zum Kühlen zu Erzeugen, wird die doublierte Platte bevorzugt vor dem Abkühlen von der Wickelrolle abgewickelt, auf der sie sich üblicherweise vor der Verarbeitung befindet.

Die Erfindung ist für alle Kautschukmischungen auf der Basis von wenigstens einem Kautschuk anwendbar. Derartige Kautschuke können beispielsweise sein: Naturkautschuk (NR) und / oder Butadien-Kautschuk (BR) und / oder Chloropren-Kautschuk (CR) und / oder Styrol-Butadien-Kautschuk (SBR) und / oder Polyisoprenkautschuk (IR)) und / oder Norbornenkautschuk (PNR) und / oder Nitrilkautschuk (NBR) und / oder Butylkautschuk (IIR) und / oder Halogen-Butylkautschuk (BIIR, CIIR) und / oder Ethylen-Propylen-Kautschuk (EPM) und / oder Ethylen-Propylen-Dien-Kautschuk (EPDM) und / oder Polyacrylat-Kautschuk (ACM) und / oder Ethylen-Acrylat-Kautschuk (AEM) und / oder Ethylen-Vinylacetat-Kautschuk (EAM) und / oder Epichlorhydrinkautschuk (ECO) und / oder Chloriertes Polyethylenkautschuk (CM) und / oder Chlorsulfonierter Polyethylenkautschuk (CSM) und / oder Silikonkautschuk (MVQ) und / oder Fluorkautschuk (FPM) und / oder Perfluorkautschuk (FFKM) und / oder Polyurethankautschuk (PUK).

Die so getrennten Platten werden einzeln sortenreiner Frischmischung zugeführt. Dies kann manuell geschehen oder mittels einem Kneter, Kalander oder Extruder. Die Qualität des Endproduktes bleibt hierbei erhalten. Durch diese sortenreine Zurückführung in das ursprüngliche Produkt ergibt sich eine erhebliche Kostenersparnis, abhängig von den betrachteten Mischungen. Gleichzeitig wird das Herstellungsverfahren des Endproduktes nicht in seiner Komplexität negativ beeinflusst.

## Patentansprüche

1. Verfahren zum Trennen von doublierten Platten auf der Basis wenigstens eines Kautschuks, umfassend wenigstens folgende Verfahrensschritte:
- Rapides Abkühlen der doublierten Platten auf Basis wenigstens eines Kautschuks auf eine Temperatur zwischen -20°C und +5°C in einem ersten Verfahrensschritt;
- Trennung der doublierten Platten durch ruckartiges Ziehen in einzelne Platten in wenigstens einem weiteren Verfahrensschritt
- Einzelnes Zuführen der getrennten Platten zu einer sortenreinen Frischmischung.

2. Verfahren nach Anspruch 1, **dadurch gekennzeichnet, dass** das rapide Abkühlen in einem Zeitraum von 1 bis 30 Minuten erfolgt.

3. Verfahren nach einem der Ansprüche 1 oder 2, **dadurch gekennzeichnet dass** die doublierten Platten vor dem ersten Verfahrensschritt abgewickelt werden.

## Claims

1. Method for separating doubled sheets on the basis of at least one rubber, comprising at least the following method steps:
- rapidly cooling the doubled sheets on the basis of at least one rubber to a temperature between - 20°C and +5°C in a first method step;
- separating the doubled sheets by abruptly pulling them into individual sheets in at least one further method step;
- individually feeding the separated sheets to a fresh mixture of a single type of material.

2. Method according to Claim 1, **characterized in that** the rapid cooling is performed in a time period of 1 to 30 minutes.

3. Method according to either of Claims 1 and 2, **characterized in that** the doubled sheets are unwound before the first method step.

## Revendications

1. Procédé de séparation de plaques doublées à base d'au moins un caoutchouc, comprenant au moins les étapes de procédé suivantes :
- refroidissement rapide des plaques doublées sur la base d'au moins un caoutchouc à une température comprise entre -20°C et +5°C dans une première étape de procédé ;
- séparation des plaques doublées par traction brusque sur des plaques individuelles dans au moins une étape de procédé supplémentaire,
- acheminement individuel des plaques séparées vers un mélange frais en fonction du type.

2. Procédé selon la revendication 1, **caractérisé en ce que** le refroidissement rapide s'effectue dans un intervalle de temps de 1 à 30 minutes.

3. Procédé selon l'une quelconque des revendications 1 à 2, **caractérisé en ce que** les plaques doublées sont déroulées avant la première étape de procédé.
